Europäisches Patentamt

European Patent Office

Office européen des brevets

(11) Veröffentlichungsnummer: **0 091 006**
**B1**

(12) **EUROPÄISCHE PATENTSCHRIFT**

(45) Veröffentlichungstag der Patentschrift: **30.09.87**

(21) Anmeldenummer: **83102871.7**

(22) Anmeldetag: **23.03.83**

(51) Int. Cl.⁴: **F 25 B 41/04**, F 25 B 49/00, F 24 F 11/08 // B60H1/32

(54) **Klimaanlage.**

(30) Priorität: **07.04.82 DE 3212979**

(43) Veröffentlichungstag der Anmeldung:
**12.10.83 Patentblatt 83/41**

(45) Bekanntmachung des Hinweises auf die
Patenterteilung:
**30.09.87 Patentblatt 87/40**

(84) Benannte Vertragsstaaten:
**AT BE FR**

(56) Entgegenhaltungen:
**DE-C- 669 665**
**US-A-2 319 130**
**US-A-2 332 981**
**US-A-3 434 299**
**US-A-3 633 379**
**US-A-3 866 439**
**US-A-3 977 205**
**US-A-4 182 133**

(73) Patentinhaber: **BROWN, BOVERI & CIE Aktiengesellschaft**
**Kallstadter Strasse 1**
**D-6800 Mannheim 31 (DE)**

(72) Erfinder: **Nestler, Dietrich**
**Feldbergstrasse 58**
**D-6800 Mannheim 1 (DE)**

(74) Vertreter: **Kempe, Wolfgang, Dr. et al**
**c/o BROWN, BOVERI & CIE AG ZPT Postfach 351**
**D-6800 Mannheim 31 (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Courier Press, Leamington Spa, England.

**Beschreibung**

Die Erfindung bezieht sich auf eine Klimaanlage mit in einem Kältemittelkreislauf angeordneten Verdichter, Kondensator, Expansionsventil, Verteiler und Verdampfer, wobei Ausgänge des Verteilers gleichmäßig verteilt über Eingänge des Verdampfers angeordnet und steuerbare Magnetventile zur Beeinflußung des Kühlmittelstromes zwischen Verdichter und Verdampfer vorgesehen sind.

Derartige Klimaanlagen dienen zur Klimatisierung von geschlossenen Räumen, wobei Zustände der Luft, wie Temperatur, Feuchte und Geschwindigkeit innerhalb gegebener Grenzen konstant gehalten werden sollen.

Klimaanlagen arbeiten häufig im Teillastbereich und besonders bei Fahrzeugklimaanlagen werden infolge der sich schnell ändernden Lastschwankungen, die im Bereich zwischen 0 bis 100% liegen können, hohe Anforderungen an die Leistungsregelung gestellt. Um unzulässige Belastungen zu vermeiden, sind die Klimaanlagen leistungsmäßig den Lastschwankungen sicher und wirtschaftlich anzupassen; auch Verluste sollen gering gehalten werden.

Die meisten Maßnahmen zur Leistungsregelung beziehen sich hauptsächlich auf die Beeinflußung der Verdichter, wobei unterschiedliche Methoden benutzt werden. Da die Verdampferleistung (wirksame Verdampfungsoberfläche) auf Vollast ausgelegt ist, muß diese an die jeweilige Verdichterleistung angepaßt werden.

Aus der US—A—2 319 130 ist eine Klimaanlage bekanntgeworden, in deren Kältemittelkreislauf vor dem Verdampfer zwei Verteiler vorgesehen sind, die über je ein Expansionsventil mit der gemeinsamen Kondensatorleitung verbunden sind. Ein Expansionsventil besitzt noch zusätzlich ein Magnetventil, das in Abhängigkeit von der in die Klimaeinrichtung eintretenden Luft derart gesteuert wird, daß bei Luft unterhalb eines bestimmten Wertes das Magnetventil das zugeordnete Expansionsventil mit dem zugehörigen Verteiler und der entsprechenden Verdampferfläche abschaltet. Gleichzeitig werden zwei Kompressorzylinder abgeschaltet. Man versucht somit durch Anpassung der im Kompressor erzeugten Leistung an die Verdampferleistung das Auftreten von Leistungsspitzen, die mit unzulässigen Druckerhöhungen verbunden sind, zu vermeiden.

Aus der US—A—3 977 205 ist eine Klimaeinrichtung bekannt, bei der das Expansionsventil mit einem Magnetventil versehen ist, so daß jedes Expansionsventil abgeschaltet werden kann. Die Expansionsventile sind mit Verteilerleitungen versehen. Ein in die Leitung zwischen Kondensator und den Magnetventilen angeordneter Druckschalter wirkt derart auf die Magnetventile ein, daß beim Absinken des Leitungsdruckes unter einen bestimmten Wert beide Magnetventile geöffnet sind, während normalerweise nur ein Magnetventil mit dem zugeordneten Expansionsventil geöffnet sind. Bei anderen Klimaanlagen wird die Verdampferleistung mittels eine thermostatischen Expansionsventils an die Verdichterleistung angepaßt. Dies ist nur bedingt möglich, da insbesondere im unteren Teillastbereich der Verdampfer mit wenig Kältemittel beaufschlagt wird, so daß sich die Überhitzungszone im Verdampfer vergrößert. Infolge der höheren Überhitzung des abgesaugten Kältemittels steigt die Ansaugtemperatur am Verdichter. Da der Thermostat des Expansionsventils in der Ansaugleitung des Verdichters angeordnet ist, wird aufgrund der hohen Temperatur des Expansionsventil soweit geöffnet, daß der Zustand einer unstabilen Regelung eintritt.

Der Erfindung liegt die Aufgabe zugrunde, mit einfachen Mitteln den Verdampfer besser den regelungstechnischen Anforderungen anzupassen und eine Überlastung des Kondensator zu vermeiden.

Diese Aufgabe wird gemäß der Erfindung dadurch gelöst, daß der Ausgang des Expansionsventils mit den Eingängen mehrerer Magnetventile und jedes Magnetventil mit einem Verteiler verbunden ist, das Expansionsventil über einen am Ausgang des Verdampfers angeordneten Thermostaten geregelt und zwischen Kompressor und Kondensator angeordnete Druckschalter auf die Magnetventile einwirken und Teilbereiche des Verdampfers als Überlastungsschutz für den Kondensator über die zugeordneten Magnetventile abschaltbar sind.

Die mit der Erfindung erzielten Vorteile bestehen insbesondere darin, daß die wirksame Verdampfungsfläche des Verdampfers der jeweiligen Verdichterleistung ungefähr angepaßt wird, indem sie zum Beispiel um ein Drittel bzw. zwei Drittel ihrer Größe verringert werden kann, so daß der Verdampfer dadurch den regelungstechnischen Anforderungen besser entspricht.

Ein weiterer Vorteil wird dadurch erzielt, daß die teilweise Abschaltung des Verdampfers als Überlastschutz für den Verflüssiger dient. Falls bei maximaler Last der Verflüssiger die anfallende Wärmemenge nicht mehr abführen kann, wird vor Erreichen des Abschaltpunktes einer Notabschaltung durch den Überdrucksicherheitsschalter, die wirksame Verdampfungsfläche des Verdampers um ein Drittel bzw. zwei Drittel ihrer Größe reduziert, so daß bei gleichbleibender Verdichterdrehzahl die Verdampfungstemperatur sinkt, und damit auch die am Verflüssiger abzuführende Wärmemenge, das heißt die Verflüssigungstemperatur steigt nicht weiter bzw. sinkt.

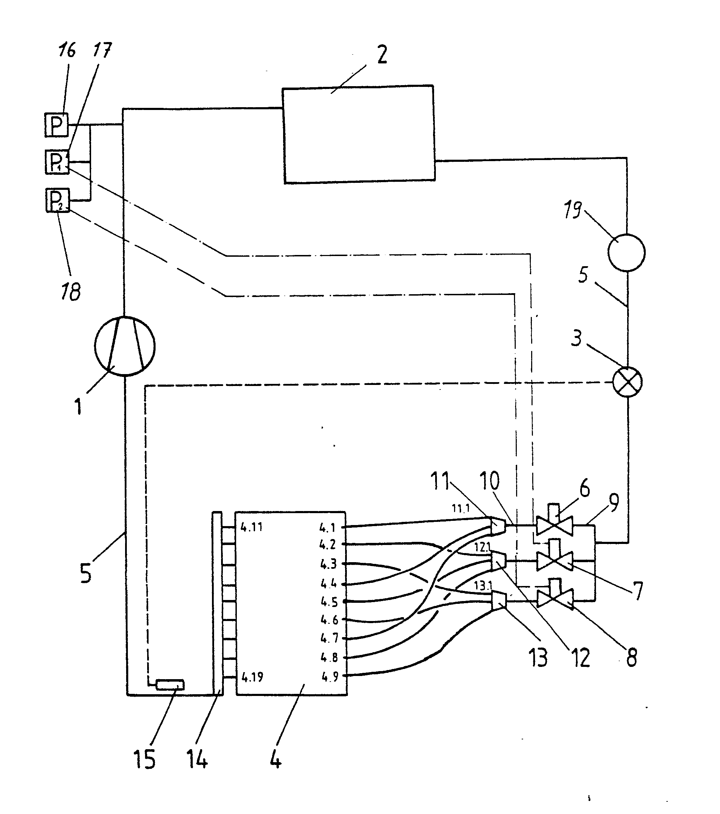

Ein Ausführungsbeispiel der Erfindung ist in der Zeichnung dargestellt und wird im folgenden näher beschrieben.

Die einzige Figur zeigt in schematischer Darstellung den Kältemittelkreislauf einer Klimaanlage mit seinen wesentlichen Komponenten, einem Verdichter 1, Verflüssiger 2, Expansionsventil 3 und Verdampfer 4, die über Leitungen 5 miteinander verbunden sind, in denen das Kältemittel zirkuliert. In den Kältemittelkreislauf sind zwischen dem Expansionsventil 3 und dem Verdampfer 4 drei Magnetventile 6, 7, 8 eingefügt, deren Eingänge 9 miteinander verbunden, auf den Ausgang des Expansionsventils 3 geführt sind. Die Ausgänge 10 der Magnetventile 6, 7, 8 sind jeweils mit dem Eingang eines Verteilers 11, 12, 13 verbunden. Jeder Verteiler hat drei Ausgänge 11.1 bis 11.3, 12.1 bis 12.3 und 13.1 bis 13.3, die gleichmäßig über die Eingänge 4.1 bis 4.9 des Verdampfers 4 verteilt sind, indem die Ausgänge 11.1, 12.1, 13.1 auf die Eingänge 4.1, 4.2, 4.3 usw. geführt sind. Die Ausgänge 4.11 bis 4.19 des Verdampfers werden über ein Sammelrohr 14 zusammengefaßt, das an die Leitung 5 angeschlossen ist.

Damit ist es nun möglich, die wirksame Verdampfungsfläche des Verdampfers 4 in drei Stufen an die Verdichterleistung anzupassen, wodurch der Verdampfer den regelungstechnischen Anforderungen besser entspricht, wie bereits oben gesagt.

Der Vorgang läuft wie folgt ab:

Bei Vollast haben alle drei Magnetventile 6, 7, 8 geöffnet und die ganze Verdampfungsfläche des Verdampfers 4 ist wirksam. Im unteren Teillastbereich, wenn der Verdampfer nur mit einer geringen Menge des Kältemittels beaufschlagt wird, soll auch nur ein Teil der Verdampfungsoberfläche wirksam sein. Durch Abschalten des Magnetventils 6 wird die wirksame Verdampfungsfläche um ein Drittel ihrer Größe verringert. Genügt dies noch nicht, kann durch zusätzliches Abschalten des Magnetventils 7 die wirksame Verdampfungsfläche um zwei Drittel ihrer Größe verringert werden. Die restliche Ausregelung erfolgt über das Expansionsventil 3, das über einen Thermostaten 15 geregelt wird.

Desweiteren wird mit Hilfe der Magnetventile 7, 8 ein Überlastschutz für den Verflüssiger 2 realisiert:

Sollte bei maximaler Last der Verflüssiger 2 die anfallende Wärmemenge nicht mehr abführen können, wird, bevor der Überdrucksicherheitsschalter 16 eine Notabschaltung auslöst, über den Druckschalter 17 zunächst das Magnetventil 7, und falls erforderlich über den Druckschalter 18 zusätzlich das Magnetventil 8 abgeschaltet, so daß die wirksame Verdampfungsfläche des Verdampfers 4 um ein bzw. zwei Drittel ihrer Größe verringert wird, so daß bei gleichbleibender Verdichterleistung die Verdampfungstemperatur sinkt, und damit auch die am Verflüssiger 2 abzuführende Wärmemenge, das heißt die Verflüssigertemperatur steigt nicht weiter bzw. sinkt.

Zwischen dem Verflüssiger 2 und dem Expansionsventil 3 ist in die Verbindungsleitung 5 noch ein Sammler 19 eingefügt. Die Druckschalter 17, 18 reagieren auf unterschiedlichen Ansprechdruck.

## Patentanspruch

Klimaanlage mit in einem Kältemittelkreislauf angeordneten Verdichter (1), Kondensator (2), Expansionsventil (3), Verteiler (11, 12, 13) und Verdampfer (4), wobei Ausgänge (11.1, 12.1, 13.1, . . .) des Verteilers gleichmäßig verteilt über Eingänge (4.1, 4.2, 4.3, . . .) des Verdampfers (4) angeordnet und steuerbare Magnetventile (6, 7, 8) zur Beeinflußung des Kühlmittelstromes zwischen Verdichter (2) und Verdampfer (4) vorgesehen sind, dadurch gekennzeichnet, daß der Ausgang des Expansionsventils (3) mit den Eingängen mehrerer Magnetventile (6, 7, 8) und jedes Magnetventil mit einem Verteiler (11, 12, 13) verbunden ist, das Expansionsventil (3) über einen am Ausgang des Verdampfers (4) angeordneten Thermostaten (15) geregelt und zwischen Kompressor (1) und Kondensator (2) angeordnete Druckschalter (17, 18) auf die Magnetventile (6, 7, 8) einwirken und Teilbereiche des Verdampfers als Überlastungsschutz für den Kondensator (2) über die zugeordneten Magnetventile (6, 7, 8) abschaltbar sind.

## Revendication

Installation de conditionnement d'air avec compresseur (1), condenseur (2), soupape de détente (3), répartiteur (11, 12, 13) et évaporateur (4) disposés dans un circuit de fluide frigorigène, des sorties (11.1, 12.1, 13.1, . . .) du répartiteur étant disposées de façon régulièrement répartie sur des entrées (4.1, 4.2, 4.3, . . .) de l'évaporateur (4) et des vannes électro-magnétiques (6, 7, 8), pouvant être commandées, étant prévues pour influencer le flux du fluide frigorigène entre compresseur (1) et évaporateur (4), caractérisée en ce que la sortie de la soupape de détente (3) est reliée aux entrées de plusieurs vannes électro-magnétiques (6, 7, 8), que chaque vanne électro-magnétique est reliée à un répartiteur (11, 12, 13), que la soupape de détente (3) est réglée par un thermostat (15) disposé à la sortie de l'évaporateur (4), que des interrupteurs à pression (17, 18) disposés entre compresseur (1) et condenseur (2) agissent sur les vannes électro-magnétiques (6, 7, 8) et que des zones partielles de l'évaporateur peuvent être mises hors circuit par les vannes électro-magnétiques (6, 7, 8) associées en vue de la protection contre les surcharges du condenseur (2).

## Claim

Air conditioning system with compressor (1), condenser (2), expansion valve (3), distributor (11, 12, 13) and evaporator (4) arranged in a coolant circuit, the outlets (11.1, 12.1, 13.1, . . .) of the distributor being arranged evenly distributed over inlets (4.1, 4.2, 4.3, . . .) of the evaporator (4) and controllable solenoid valves (6, 7, 8) being provided for influencing the coolant flow between compressor (1) and evaporator (4), characterized in that the outlet of the expansion valve (3) is connected to the inlets of a number of solenoid valves (6, 7, 8) and each solenoid valve is connected to a distributor (11, 12, 13), the expansion valve (3) is controlled via a thermostat (15) arranged at the outlet of the evaporator (4) and pressure switches (17, 18) arranged between compressor (1) and condenser (2) act on the solenoid valves (6, 7, 8) and partial areas of the evaporator can be disconnected via the assigned solenoid valves (6, 7, 8) as overload protection for the condenser (2).